# EUROPÄISCHE PATENTSCHRIFT

(11) **EP 4 480 444 B1**
(45) Veröffentlichungstag und Bekanntmachung des Hinweises auf die Patenterteilung: **30.09.2026**
(21) Anmeldenummer: 24211110.2
(22) Anmeldetag: 08.03.2022
(51) Int. Cl.: A61C 13/00

(54) **HALTEVORRICHTUNG FÜR EINEN DENTALROHLING**
HOLDING DEVICE FOR A DENTAL BLANK
DISPOSITIF DE RETENUE POUR UNE ÉBAUCHE DENTAIRE

(43) Veröffentlichungstag der Anmeldung: 25.12.2024
(62) Dokumentnummer(n) der früheren Anmeldung(en) nach Art. 76 EPÜ: 22160824.3 / 4 241 732
(73) Patentinhaber: Ivoclar Vivadent AG, 9494 Schaan (LI)
(72) Erfinder: Bitar, Nicola, 9462 Montlingen (CH); Christanell, Felix, 39025 Naturns (IT)
(74) Vertreter: Baldus, Oliver

(56) Entgegenhaltungen:
- EP-A1- 3 284 438
- EP-A1- 3 372 192
- EP-A1- 3 995 107

## Beschreibung

Die vorliegende Erfindung betrifft eine Haltevorrichtung für einen runden Dentalrohling und ein Verfahren zum Einspannen eines runden Dentalrohlings.

Dentalrohlinge zum Herstellen von Dentalobjekten in dentaltechnischen Herstellungsgeräten weisen oft fertigungsbedingte Toleranzen auf. Beispielsweise kann der Durchmesser von kreisförmigen oder runden Dentalrohlingen variieren. Werden diese in herkömmlichen Haltevorrichtungen angeordnet, weisen diese ein Spiel auf. Dies führt bei der Herstellung von Dentalobjekten, beispielsweise mithilfe eines Fräsverfahrens, zu Ungenauigkeiten. Zudem können beim Einspannen des Dentalrohlings Abplatzungen an der Umlaufkerbe entstehen, die Chipping genannt werden.

Die Druckschrift EP 3 995 107 A1 betrifft einen Dentalronden-Halter und eine Anordnung aus Halter und Dentalronde. Der Dentalronden-Halter besteht aus zwei Halbschalen. Es muss ausdrücklich auf die Tatsache hingewiesen werden, dass dieses Dokument unter Art. 54(3) EPÜ fällt. Damit wird die Öffentlichkeit davon unterrichtet, dass das Dokument für die Frage der erfinderischen Tätigkeit nicht von Bedeutung ist.

Die Druckschrift EP 3 372 192 A1 betrifft das stabile und wiederholbare Positionieren von Dentalmaterialrohlingen in einem Halter einer Herstellungsvorrichtung.

Die Druckschrift EP 3 284 438 A1 betrifft einen Fräsrohling für dentales CAD/CAM mit einer säulenförmigen Scheibenform. Der Fräsrohling für ein dentales CAD/CAM wird gehalten, indem eine Seite zweier halbzylindrischer Elemente durch ein Scharnier verbunden wird und die andere Seite der halbzylindrischen Elemente mittels einer Schraube geschlossen wird

Es ist die technische Aufgabe der vorliegenden Erfindung, eine Haltevorrichtung für einen runden Dentalrohling derart zu verbessern, dass Dentalrohlinge mit unterschiedlichen Fertigungstoleranzen spielfrei aufgenommen werden können.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch eine Haltevorrichtung für einen runden Dentalrohling gelöst, mit einem offenen Ringelement zum seitlichen Umgreifen des Dentalrohlings; und einem Schließelement zum Schließen des Ringelements an mehreren Positionen, das eine Zunge und eine Aussparung zum Einschieben oder Einrasten der Zunge umfasst.

Durch die Haltevorrichtung wird der technische Vorteil erreicht, dass auch Dentalrohlinge mit unterschiedlichen Durchmessern sicher in der Haltevorrichtung befestigt werden können, da das Ringelement stets unter Spannung geschlossen werden kann. Bei einem größeren Umfang des Dentalrohlings wird das Schließelement in einer weiteren Position geschlossen und bei einem kleineren Umfang des Dentalrohlings wird das Schließelement in einer engeren Position geschlossen. Dadurch können auch Dentalrohlinge mit Fertigungstoleranzen spielfrei vorgespannt und befestigt werden. Die Haltevorrichtung kann sich den verschiedenen Durchmessern der Dentalrohlinge anpassen.

Die Zunge kann Rastelemente aufweisen, die auf der Gegenseite des Ringelements in größere Rastgeometrien eingreifen. Mittels der größer dimensionierten Rastgeometrien können auch die Fertigungstoleranzen kompensiert werden.

Dadurch wird beispielsweise der technische Vorteil erreicht, dass der Umfang des Ringelements kontinuierlich im Bereich der Länge der Zunge oder Tiefe der Aussparung verändert werden kann. Die Aussparung oder Zunge kann auch mit positiven oder negativen Rastgeometrien ausgebildet sein, die in entsprechende gegenüberliegende Rastgeometrien eingreifen. In einer weiteren technisch vorteilhaften Ausführungsform der Haltevorrichtung umfasst die Zunge oder die Aussparung ein oder mehrere Verschlussgeometrien. Die Verschlussgeometrien können beispielsweise Verschweißungsrippen umfassen. Dadurch wird beispielsweise der technische Vorteil erreicht, dass die Zunge mit der Aussparung wirksam verschweißt werden kann.

In einer weiteren technisch vorteilhaften Ausführungsform der Haltevorrichtung umfasst das eine Ende des Ringelements eine erste Spanngeometrie zum Angreifen eines ersten Spanndorns und das andere Ende des Ringelements eine zweite Spanngeometrie zum Angreifen eines zweiten Spanndorns. Die Spanngeometrien können als Aussparungen gebildet sein, in die der jeweilige Spanndorn eingesetzt werden kann. Dadurch wird beispielsweise der technische Vorteil erreicht, dass das Ringelement mit einer hohen Spannung geschlossen werden und einer Vorspannung beaufschlagt werden kann.

In einer weiteren technisch vorteilhaften Ausführungsform der Haltevorrichtung umfasst das Ringelement einen Klebespalt zum Einfügen eines Klebers oder einen Befestigungsspalt. Der Klebespalt oder der Befestigungsspalt kann zwischen einem oberen umlaufenden Rand und einem unteren umlaufenden Rand des Ringelements angeordnet sein. Der Kleber kann in dem Klebespalt im Vorhinein, während einem Spritzgießen der Haltevorrichtung angeordnet werden.

Mittels einer Schrumpfung oder des Vorspannens des Ringelements können die Festhaltepunkte und/oder Aufliegefüße in spitzer Ausgestaltung in das Material eindringen und dadurch den Halt verbessern. Bei harten Dentalrohlingen können diese verformt oder gequetscht werden, ohne in das Material des Dentalrohlings einzudringen. Mittels den Festhaltepunkten und/oder den Aufliegefüßen kann die Befestigung der Haltevorrichtung verbessert werden. Dadurch wird beispielsweise der technische Vorteil erreicht, dass die Halterung des Dentalrohlings zusätzlich stabilisiert wird. Dies ist zudem bei Temperaturschwankungen vorteilhaft, die beim Transport in verschiedene Klimazonen entstehen können. Dadurch können die unterschiedlichen Temperaturausdehnungskoeffizienten der Materialen bei Temperaturschwankungen ausgeglichen werden können.

In einer weiteren technisch vorteilhaften Ausführungsform der Haltevorrichtung umfasst der Klebespalt zumindest eine umlaufende Überschussmulde zum Aufnehmen des überschüssigen Klebers. Dadurch wird beispielsweise der technische Vorteil erreicht, dass der flüssige Kleber nicht aus dem Klebespalt herausquellen kann.

In einer weiteren technisch vorteilhaften Ausführungsform der Haltevorrichtung umfasst der Klebespalt eine erste umlaufende Überschussmulde, die benachbart zu einem oberen umlaufenden Rand verläuft und eine zweite umlaufende Überschussmulde, die benachbart zu einem unteren umlaufenden Rand verläuft. Dadurch wird beispielsweise der technische Vorteil erreicht, dass vor jedem Rand eine Überschussmulde angeordnet ist, die ein Auslaufen von Kleber wirksam verhindert.

In einer weiteren technisch vorteilhaften Ausführungsform der Haltevorrichtung umfasst der Klebespalt mehrere vorspringende Festhaltepunkte. Dadurch wird beispielsweise der technische Vorteil erreicht, dass sich eine vorläufige Befestigung des Dentalrohlings erreichen lässt, bevor der Kleber ausgehärtet ist.

In einer weiteren technisch vorteilhaften Ausführungsform der Haltevorrichtung sind die Festhaltepunkte entlang des Klebespaltes verteilt und/oder in der Mitte des Klebespalts angeordnet sind. Dadurch wird beispielsweise der technische Vorteil erreicht, dass sich ein hoher Druck auf den Umfang des Dentalrohlings ausüben lässt, durch den sie die Fixierung des Dentalrohlings verbessert.

In einer weiteren technisch vorteilhaften Ausführungsform der Haltevorrichtung umfasst der Klebespalt mehrere vorspringende Aufliegefüße. Dadurch wird beispielsweise der technische Vorteil erreicht, dass eine bessere Haftung erzielt wird. Als Klebespaltverdünnungen vergrößern die Aufliegefüße die Klebefläche und erzeugen eine größere Steifigkeit.

In einer weiteren technisch vorteilhaften Ausführungsform der Haltevorrichtung sind die Aufliegefüße entlang des Klebespaltes verteilt und/oder in Paaren angeordnet. Dadurch wird beispielsweise der technische Vorteil erreicht, dass eine noch bessere Haftung erreicht wird.

In einer weiteren technisch vorteilhaften Ausführungsform der Haltevorrichtung umfasst das Ringelement an seinem Außenumfang eine Gelenkkerbe. Dadurch wird beispielsweise der technische Vorteil erreicht, dass dieses aufgeweitet werden kann und auf einfache Weise um den Dentalrohling herum angeordnet werden kann. Zudem wird ein definiertes Aufweiten oder Öffnen ermöglicht.

In einer weiteren technisch vorteilhaften Ausführungsform der Haltevorrichtung ist die Gelenkkerbe gegenüber von dem Schließelement angeordnet. Dadurch wird beispielsweise der technische Vorteil erreicht, dass das Ringelement weit geöffnet werden kann. Die Gelenkkerbe kann zudem eine Elastizität des Ringelements in Längsrichtung bewirken. In diesem Fall liegt das Ringelement stets am Dentalrohling an.

In einer weiteren technisch vorteilhaften Ausführungsform der Haltevorrichtung umfasst das Ringelement zumindest ein Kantenschutzelement zum Umgreifen einer Kante des Dentalrohlings. Dadurch wird beispielsweise der technische Vorteil erreicht, dass eine Beschädigung der Kanten des Dentalrohlings verhindert werden kann.

Gemäß einem zweiten Aspekt wird die technische Aufgabe durch ein Verfahren zum Einspannen eines runden Dentalrohlings mit einer Haltevorrichtung nach dem ersten Aspekt gelöst. Durch das Verfahren werden die gleichen technische Vorteile wie durch die Haltevorrichtung gelöst.

Ausführungsbeispiele der Erfindung sind in den Zeichnungen dargestellt und werden im Folgenden näher beschrieben.

Es zeigen:
- Fig. 1: eine Ansicht einer Haltevorrichtung und eines Dentalrohlings;
- Fig. 2: eine Querschnittsansicht durch die Haltevorrichtung;
- Fig. 3: mehrere Ansichten eines Schließelements;
- Fig. 4: eine Ansicht einer Gelenkkerbe;
- Fig. 5: eine Querschnittsansicht durch die Haltevorrichtung; und
- Fig. 6: eine Ansicht eines Schließgerätes zum Schließen eines Schließelements.

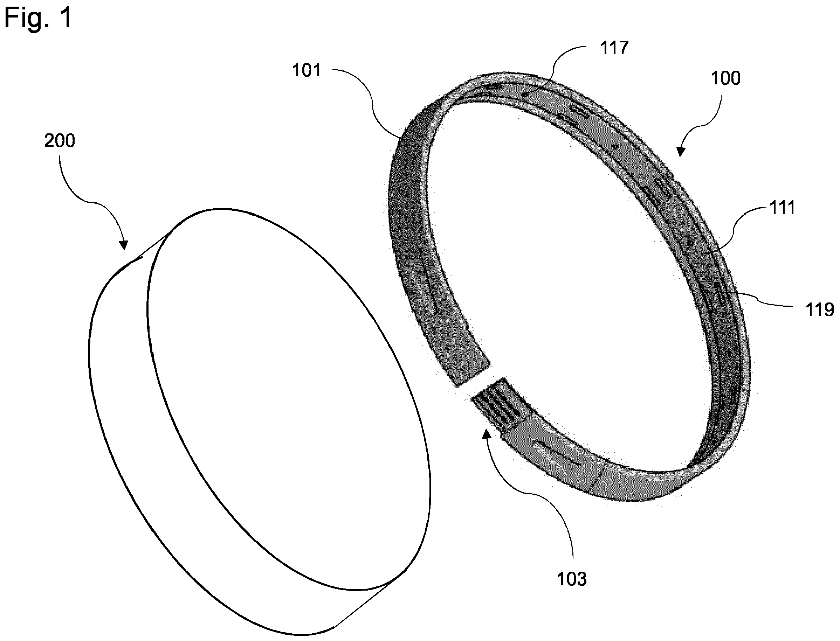

Fig. 1 zeigt eine Ansicht eine Haltevorrichtung 100 für einen runden Dentalrohling 200. Der runde Dentalrohling kann ein kreisscheibenförmiger, ein zylindrischer oder ein ovaler Dentalrohling 200 sein. Die Haltevorrichtung für alle Formen von Dentalrohlingen geeignet, die sich mittels des Ringelements 101 umschließen lassen. Die Haltevorrichtung 100 umfasst ein offenes, gürtelförmiges Ringelement 101 zum seitlichen Umgreifen des Dentalrohlings 200. Die Kante des Ringelements 101 kann unten und oben abgerundet sein.

Zudem umfasst die Haltevorrichtung 100 ein Schließelement 103 zum Schließen des Ringelements 101 an mehreren Positionen. Die Haltevorrichtung 100 ist aus Kunststoff gebildet, wie beispielsweise Polyamid (PA12). Der Dentalrohling 200 ist ein kreisscheibenförmiger Rohling wie beispielsweise aus Zirkon, aus dem Dentalobjekte herausgefräst werden können.

Durch das Schließen des Ringelements 101 an unterschiedlichen Positionen kann sichergestellt werden, dass das Ringelement 101 stets mit einer ausreichenden Vorspannung um den Dentalrohling 200 gespannt ist. Bei kleineren Dentalrohlingen 200 wird das Ringelement 101 an einer engeren Position geschlossen. Bei größeren Dentalrohlingen 200 wird das Ringelement 101 an einer weiteren Position geschlossen.

Das Ringelement 101 umfasst entlang seiner Länge einen Klebespalt 111, in den ein flüssiger Kleber eingebracht wird. Der Kleber verbindet die Haltevorrichtung 100 zusätzlich mit dem Dentalrohling 200. Der Klebepalt 111 umfasst zusätzlich spitz zulaufende und vorspringende Festhaltepunkte 117, die an der Seitenfläche des Dentalrohlings 200 anliegen. Als Kleber kann ein flüssiges Polymer verwendet werden, das mit Luftfeuchtigkeit aushärtet. Es kann auch ein Befestigungsspalt 111 vorgesehen sein, der die Elastizität des Ringelements 101 erhöht und zur Befestigung des Haltevorrichtung 100 dient. Des Weiteren umfasst der Klebespalt oder der Befestigungsspalt 111 Aufliegefüße 119, die auf gleicher Höhe wie die Außenwände des Ringelements 101 angeordnet sind.

Durch die langestreckten Aufliegefüße 119 wird eine optimierte Haftung erhalten. Als Klebespaltverdünnungen vergrößern die Aufliegefüße 119 die Klebefläche und erzeugen eine größere Steifigkeit des Ringelements 101. Durch die Aufliegefüße 119 kann eine möglichst schnelle Soforthaftung erzielt werden.

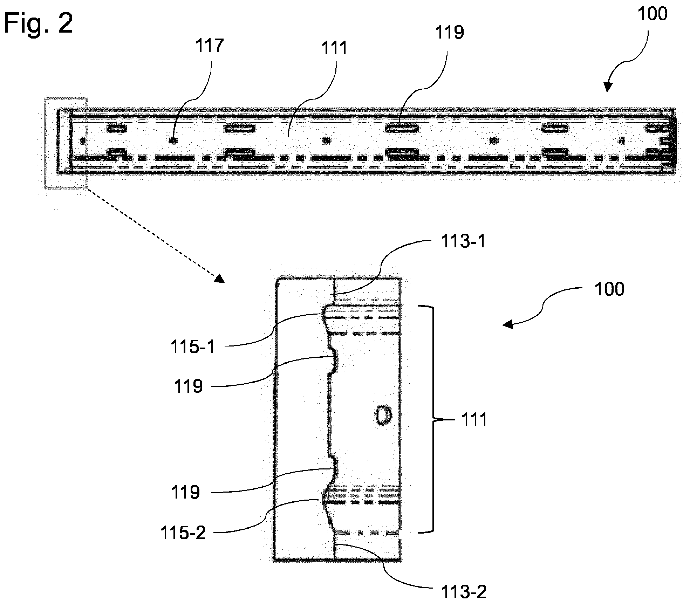

Fig. 2 zeigt eine Querschnittsansicht durch die Haltevorrichtung 100. Der Klebespalt 111 zum Aufnehmen des Klebers verläuft zwischen einem oberen umlaufenden Rand 113-1 und einem unteren umlaufenden Rand 113-2 des Ringelements 101. Der Klebespalt 111 weist beispielsweise eine Tiefe von 0.2 mm auf und ist in der Mitte des Ringelements 101 angeordnet. Oberfläche des Klebespalts 111 kann aufgeraut sein, so dass der Kleber besser haften bleibt. Dies kann durch eine sandgestrahlte Oberfläche eines Spritzgusswerkstücks erreicht werden.

Eine obere umlaufende Überschussmulde 115-1 verläuft benachbart zu einem oberen umlaufenden Rand 113-1 und eine untere umlaufende Überschussmulde 115-2 verläuft benachbart zu einem unteren umlaufenden Rand 113-1. Die Überschussmulden 115-1 und 115-2 nehmen überschüssigen Kleber auf, so dass dieser nicht aus dem Klebespalt 111 nach außen dringen kann. Die Überschussmulde hat beispielsweise eine Tiefe von 0.4 mm und damit ein 0.2 mm niedrigeres Niveau als der Klebespalt 111.

Das Ringelement 101 umfasst vorzugsweise spitz zulaufende Festhaltepunkte 117 in der Mitte des Klebespalts 111. Die Festhaltepunkte 117 verhindern ein Verrutschen der Haltevorrichtung 100 bis zur Aushärtung des Klebers. Die Festhaltepunkte 117 sind entlang des Klebespalts 111 verteilt und weisen beispielsweise einen Überstand von 0.1 mm. Die Festhaltepunkte 117 werden beim Anbringen des Ringelementes 101 an die Scheibe des Dentalrohlings 200 angepresst und verformt oder dringen in den Dentalrohling 200 ein. Auf diese Weise werden diese mit einer Vorspannung beaufschlagt. Die Festhaltepunkte 117 verhindern ein Verrutschen bei den späteren Verarbeitungsschritten, wie beispielsweise beim Bedrucken, Etikettieren oder Verpacken.

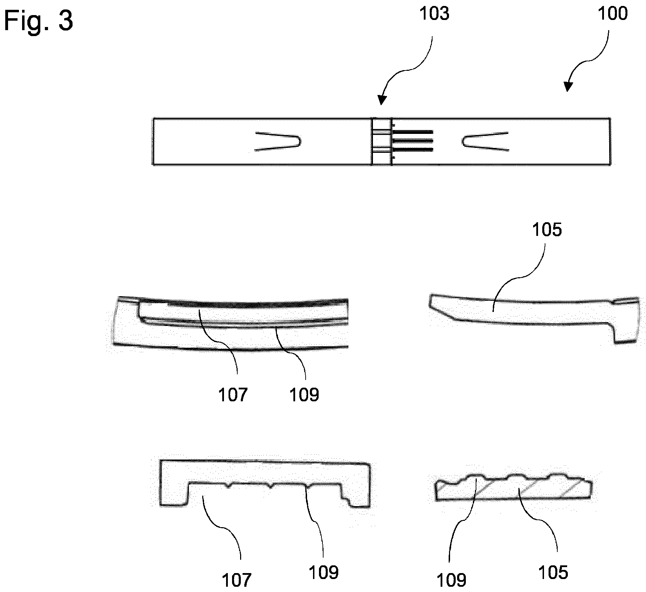

Fig. 3 zeigt mehrere Ansichten eines Schließelements 103. Erhebungen und Vertiefungen ineinandergreifen. Das Ringelement 101 weist eine Öffnung auf, mit der die Haltevorrichtung 100 an dem Dentalrohling 200 angebracht werden kann.

Zum Schließen des Ringelements 101 umfasst dieses erfindungsgemäß ein Schließelement 103, das mit einer Überlappung versehen ist, an der die zwei Enden des Ringelementes zusammengeschweißt werden können. Die Überlappung ist durch eine Zunge 105 gebildet, die an einem Ende des Ringelements 101 angeordnet ist und eine Aussparung 107 zum Einschieben der Zunge 105, die an einem anderen Ende des Ringelements 101 angeordnet ist. Die Zunge 105 kann kontinuierlich in die Aussparung 107 geschoben werden. Auf diese Weise kann die Haltervorrichtung 100 kontinuierlich an zahlreichen Positionen geschlossen werden und sich so dem Durchmesser des Dentalrohlings 200 anpassen. Je nach Position wird dabei ein anderer Innendurchmesser der Haltevorrichtung 100 erreicht.

Das Ringelement 101 kann neben einer Verklebung auch mittels einer Schrumpfung, d.h. ohne Kleber, an dem Dentalrohling 200 befestigt werden. Die Haltervorrichtung 100 kann mittels einer Verklebung und/oder Schrumpfung fixiert werden.

Zur Verbesserung der Verschweißung verfügt die Überlappung erfindungsgemäß an der Zunge 105 und der der Aussparung 107 über erhabene Verschweißungsrippen 109. Die länglichen Verschweißungsrippen erstrecken sich in Einsteckrichtung der Zunge 105 und der Aussparung 107. Die Verschweißungsrippen als mögliche Verschlussgeometrie 109 erzeugen definierte Kontaktbereiche zwischen Zunge 105 und Aussparung 109, an denen das Material gezielt mittels eines Ultraschallschweißverfahrens aufgeschmolzen werden kann, um die beiden Enden des Ringelements 101 miteinander zu verbinden. Das Schließelement kann auch mittels einem Heißprägen oder einem Schnellkleben geschlossen werden. Die Überlappung durch das Schließelement 103 ist so gestaltet, dass eine Umschlingung von Dentalrohlingen 200 mit unterschiedlichen Durchmessern möglich ist. Die Überlappung bei der Verschweißung beträgt beispielsweise 4 bis 6 mm.

So kann sich bei kleinen Dentalrohlingen 200 ein Frontspalt an der Schweißseite von 1 mm und bei großen Dentalrohlingen 200 ein Frontspalt von 4 mm ergeben. Um eine Sichtbarkeit des Dentalrohlings 200 zu verhindern, können zwei zusätzliche Überlappungen an der Schweißstelle angebracht sein.

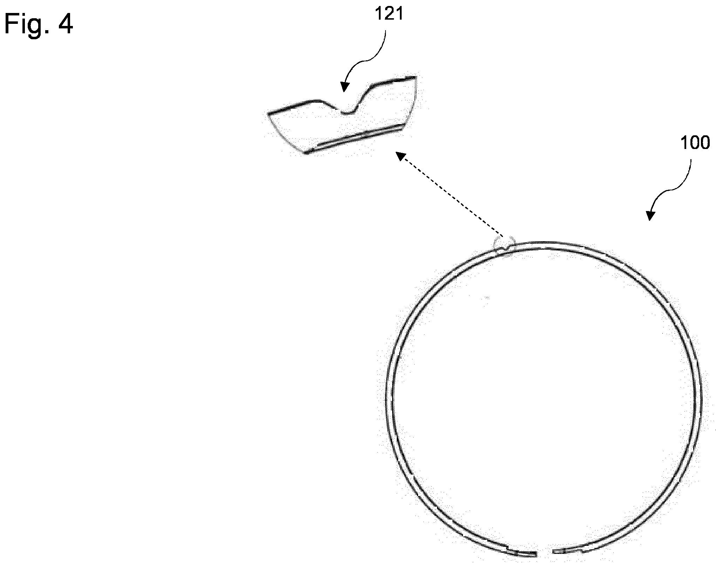

Fig. 4 zeigt eine Ansicht einer Gelenkkerbe 121. Die Gelenkkerbe 121 ist durch eine V-förmige Vertiefung im Ringelement 101 gebildet und ermöglicht ein gelenkartiges Knicken des Ringelementes. Dadurch kann das Ringelement 101 geöffnet werden und um den Dentalrohling 200 gelegt werden. Die Gelenkkerbe 121 ermöglicht ein definiertes Ausweiten des Ringelements 101. Die Gelenkkerbe 121 ist gegenüber von dem Schließelement 103 angeordnet.

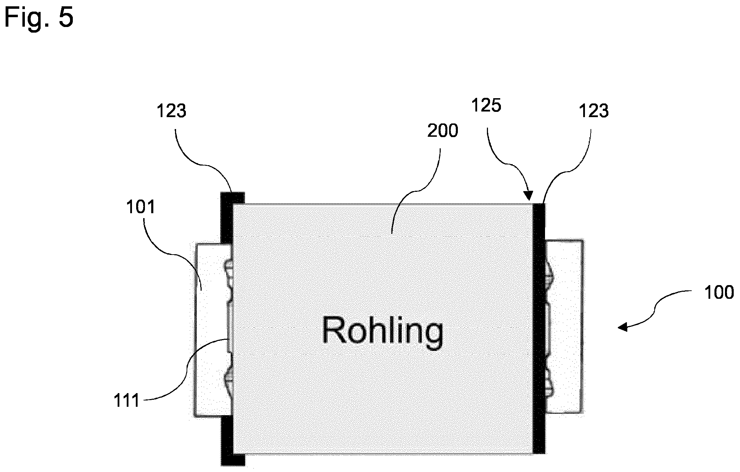

Fig. 5 zeigt eine Querschnittsansicht durch die Haltevorrichtung 100. Die Haltevorrichtung 100 umfasst ein Kantenschutzelement 123 zum Schützen oder Umgreifen einer Kante 125 des Dentalrohlings 200. Das gewinkelte oder gerade Kantenschutzelement 123 erstreckt sich vom Ringelement 101.

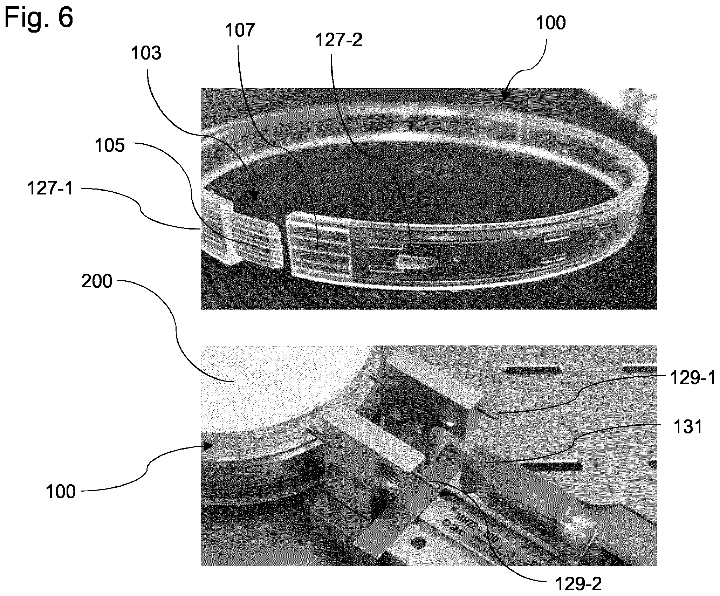

Fig. 6 zeigt eine Ansicht eines Schließgerätes 300 zum Schließen eines Schließelements 103 mit einer Zunge 105. Der Kleber wird vor Anbringung des Ringelements 101 radial auf dem Dentalrohling 200 mittels einer Auftragsvorrichtung aufgebracht. Hierbei dreht sich der Dentalrohling 200 und der Kleber wird aufgetragen. In diesem Fall liegt der Vorteil darin, dass der Kelber nach Aufbringung des Ringelements 101 nicht mit dem Benutzer in Berührung kommt. Des Weiteren sind keine Klebezuführkanäle notwendig.

Das Schließgerät 300 verfügt über ein System zum Anpressen des Ringelementes 101. Durch das System wird das Ringelement 101 mit einer Kraft auf den Dentalrohling 200 gespannt. Das Schließgerät 300 kann über einen Zylinder und eine Verstärkungsfeder eine definierte Kraft an das Ringelement 101 anlegen. Zur Übertragung der Kraft umfasst das eine Ende des Ringelements 101 eine erste Spanngeometrie 127-1 zum Angreifen eines ersten Spanndorns 129-1 und das andere Ende des Ringelements 101 eine zweite Spanngeometrie 127-2 zum Angreifen eines zweiten Spanndorns 129-2. Die Spanngeometrien 127-1 und 127-2 sind beispielsweise als Aussparungen oder Vertiefungen in dem Ringelement Ringelement 101 gebildet. Durch die Spanngeometrien 127-1 und 127-2 kann die Ringvorspannung präzise eingestellt werden. Die Spanngeometrien 127-1 und 127-2 können in unterschiedlichen Ausgestaltungen, wie beispielsweise eckig, rechteckig, rund, oder oval, an geeigneter Stelle radial umlaufend am Ringelement 101 oder an den Kanten des Ringelements 101 angeordnet sein. Durch die Spanngeometrien 127-1 und 127-2 kann mittels eines Werkzeugs Beim Schließen ein Zug auf das Ringelement 101 ausgeübt werden, so dass dieses mit einer Vorspannung geschlossen werden kann.

Die Vorspannung kann genau durch das Anlegen eines Pressluftdrucks an den Zylinder der Vorspanneinrichtung erfolgen. Die Messung der Vorspannkraft kann mittels einer Kraftmessdose durchgeführt werden. Durch das Variieren eines Pressluftdrucks kann die Vorspannung des Ringelements 101 unterschiedlich stark beaufschlagt werden.

Ist das Ringelement 101 gespannt, wird das überlappende Schließelement 103 mittels einer Ultraschallschweißung, Heißprägung oder Schnellkleber geschlossen. Hierzu wird auf das Schließelement 103 ein Ultraschallschweißkopf 131 gedrückt. Dieser erhitz und verschmilzt das Schließelement 103. Die Verschweißung ist von außen nicht ersichtlich. Die Haftung der Verschweißung ist mit einfachen Schweißparametern zu realisieren und liegt über der benötigten Haftung. Bei der Schweißstelle erfolgt eine Überlappung, so dass der Dentalrohling 200 von vorne nicht zu sehen ist.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

## Patentansprüche

1. Haltevorrichtung (100) für einen runden Dentalrohling (200), mit:
- einem offenen Ringelement (101) zum seitlichen Umgreifen des Dentalrohlings (200); und
- einem Schließelement (103) zum Schließen des Ringelements (101) an mehreren Positionen, wobei das Schließelement (103) durch eine Zunge (105) und eine Aussparung (107) zum Einschieben oder Einrasten der Zunge (105) umfasst,
**dadurch gekennzeichnet, dass** das Schließelement (103) mit einer Überlappung versehen ist, an der die zwei Enden des Ringelementes (101) zusammengeschweißt werden können und die durch die Zunge (105) gebildet ist,
wobei die Zunge (105) an einem Ende des Ringelements (101) angeordnet ist und die Aussparung (107) zum Einschieben der Zunge (105) an einem anderen Ende des Ringelements (101) angeordnet ist,
wobei die Zunge (105) kontinuierlich in die Aussparung (107) geschoben werden kann, so dass die Haltervorrichtung (100) kontinuierlich an zahlreichen Positionen geschlossen werden und sich so dem Durchmesser des Dentalrohlings 200 anpassen kann,
wobei die Überlappung an der Zunge (105) und der Aussparung (107) über erhabene Verschweißungsrippen (109) zur Verbesserung der Verschweißung verfügt, und
wobei sich die länglichen Verschweißungsrippen (109) in Einsteckrichtung der Zunge (105) und der Aussparung (107) erstrecken und als mögliche Verschlussgeometrie definierte Kontaktbereiche zwischen der Zunge (105) und der Aussparung (109) erzeugen, an denen das Material gezielt mittels eines Ultraschallschweißverfahrens aufgeschmolzen werden kann, um die beiden Enden des Ringelements (101) miteinander zu verbinden.

2. Haltevorrichtung (100) nach Anspruch 1, wobei die Zunge (105) oder die Aussparung (107) ein oder mehrere Verschlussgeometrien (109) umfasst.

3. Haltevorrichtung (100) nach einem der vorangehenden Ansprüche, wobei das eine Ende des Ringelements (101) eine erste Spanngeometrie (127-1) zum Angreifen eines ersten Spanndorns (129-1) und das andere Ende des Ringelements (101) eine zweite Spanngeometrie (127-2) zum Angreifen eines zweiten Spanndorns (129-2) umfasst.

4. Haltevorrichtung (100) nach einem der vorangehenden Ansprüche, wobei das Ringelement (101) einen Klebespalt (111) zum Einfügen eines Klebers umfasst.

5. Haltevorrichtung (100) nach Anspruch 4, wobei der Klebespalt (111) zumindest eine umlaufende Überschussmulde (115-1, 115-2) zum Aufnehmen des überschüssigen Klebers umfasst.

6. Haltevorrichtung (100) nach Anspruch 5, wobei der Klebespalt (111) eine erste umlaufende Überschussmulde (115-1) umfasst, die benachbart zu einem oberen umlaufenden Rand (113-1) verläuft und eine zweite umlaufende Überschussmulde (115-2) umfasst, die benachbart zu einem unteren umlaufenden Rand (113-1) verläuft.

7. Haltevorrichtung (100) nach einem der Ansprüche 4 bis 6, wobei der Klebespalt (111) mehrere vorspringende Festhaltepunkte (117) umfasst.

8. Haltevorrichtung (100) nach Anspruch 7, wobei die Festhaltepunkte (117) entlang des Klebespaltes (111) verteilt sind und/oder in der Mitte des Klebespalts (111) angeordnet sind.

9. Haltevorrichtung (100) nach einem der Ansprüche 3 bis 8, wobei der Klebespalt (111) mehrere vorspringende Aufliegefüße (119) umfasst.

10. Haltevorrichtung (100) nach Anspruch 9, wobei die Aufliegefüße (119) entlang des Klebespaltes (111) verteilt sind und/oder in Paaren angeordnet sind.

11. Haltevorrichtung (100) nach einem der vorangehenden Ansprüche, wobei das Ringelement (101) an seinem Außenumfang eine Gelenkkerbe (121) umfasst.

12. Haltevorrichtung (100) nach Anspruch 11, wobei die Gelenkkerbe (121) gegenüber von dem Schließelement (103) angeordnet ist.

13. Haltevorrichtung (100) nach einem der vorangehenden Ansprüche, wobei das Ringelement (101) zumindest ein Kantenschutzelement (123) zum Umgreifen einer Kante (125) des Dentalrohlings (200) umfasst.

14. Verfahren zum Einspannen eines runden Dentalrohlings (200) mit einer Haltevorrichtung (100) nach einem der Ansprüche 1 bis 13.

## Claims

1. A holding device (100) for a round dental blank (200), comprising:
- an open ring element (101) for laterally gripping around the dental blank (200); and
- a closing element (103) for closing the ring element (101) at various positions, wherein the closing element (103) comprises a tongue (105) and a recess (107) for inserting or engaging the tongue (105),
**characterized in that** the closing element (103) is provided with an overlap where the two ends of the ring element (101) can be welded together and which is formed by the tongue (105),
wherein the tongue (105) is arranged at one end of the ring element (101) and the recess (107) for inserting the tongue (105) is arranged at another end of the ring element (101),
wherein the tongue (105) can be inserted into the recess (107) continuously so that the holding device (100) can be closed continuously at various positions and thus can adjust to the diameter of the dental blank (200),
wherein the overlap at the tongue (105) and the recess (107) is provided with raised welding ribs (109) to improve the welding, and
wherein the elongated welding ribs (109) extend in the direction of insertion of the tongue (105) and the recess (107) and create defined contact areas, as a possible closure geometry, between the tongue (105) and the recess (109), where material can be selectively melted using an ultrasonic welding process to join the two ends of the ring element (101) together

2. The holding device (100) according to claim 1, wherein the tongue (105) or recess (107) comprises one or more closure geometries (109).

3. The holding device (100) according to any one of the preceding claims, wherein the one end of the ring element (101) comprises a first clamping geometry (127-1) for engaging a first tensioning mandrel (129-1) and the other end of the ring element (101) comprises a second clamping geometry (127-2) for engaging a second tensioning mandrel (129-2).

4. The holding device (100) according to any one of the preceding claims, wherein the ring element (101) comprises an adhesive gap (111) for inserting an adhesive.

5. The holding device (100) according to claim 4, wherein the adhesive gap (111) comprises at least one circumferential excess trough (115-1, 115-2) for receiving the excess adhesive.

6. The holding device (100) according to claim 5, wherein the adhesive gap (111) comprises a first circumferential excess trough (115-1) extending adjacent an upper circumferential edge (113-1) and a second circumferential excess trough (115-2) extending adjacent a lower circumferential edge (113-1).

7. The holding device (100) according to any one of claims 4 to 6, wherein the adhesive gap (111) comprises a plurality of protruding fixing points (117).

8. The holding device (100) according to claim 7, wherein the fixing points (117) are distributed along the adhesive gap (111) and/or are arranged in the center of the adhesive gap (111).

9. The holding device (100) according to any one of claims 3 to 8, wherein the adhesive gap (111) comprises a plurality of protruding contact feet (119).

10. The holding device (100) according to claim 9, wherein the contact feet (119) are distributed along the adhesive gap (111) and/or are arranged in pairs.

11. The holding device (100) according to any one of the preceding claims, wherein the ring element (101) comprises a hinge notch (121) on its outer circumference.

12. The holding device (100) according to claim 11, wherein the hinge notch (121) is arranged opposite from the closing element (103).

13. The holding device (100) according to any one of the preceding claims, wherein the ring element (101) comprises at least one edge protection element (123) for gripping around an edge (125) of the dental blank (200).

14. A method for clamping a round dental blank (200) with a holding device (100) according to any one of claims 1 to 13.

## Revendications

1. Dispositif de maintien (100) pour une ébauche dentaire ronde (200), comprenant :
- un élément annulaire ouvert (101) destiné à enserrer latéralement l'ébauche dentaire (200) ; et
- un élément de fermeture (103) destiné à fermer l'élément annulaire (101) à plusieurs positions, l'élément de fermeture (103) comprenant une languette (105) et un évidement (107) destiné à l'insertion ou à l'encliquetage de la languette (105),
**caractérisé en ce que** l'élément de fermeture (103) est muni d'un chevauchement au niveau duquel les deux extrémités de l'élément annulaire (101) peuvent être soudées l'une à l'autre et qui est formé par la languette (105),
la languette (105) étant disposée à une extrémité de l'élément annulaire (101) et l'évidement (107) destiné à l'insertion de la languette (105) étant disposé à une autre extrémité de l'élément annulaire (101),
la languette (105) pouvant être insérée dans l'évidement (107) de manière continue, de sorte que le dispositif de maintien (100) puisse être fermé en continu à de nombreuses positions et s'adapte ainsi au diamètre de l'ébauche dentaire (200),
dans lequel le chevauchement au niveau de la languette (105) et de l'évidement (107) est muni de nervures de soudure en relief (109) afin d'améliorer la soudure, et dans lequel les nervures de soudure allongées (109) s'étendent dans la direction d'insertion de la languette (105) et de l'évidement (107) et créent des zones de contact définies, en tant que géométrie de fermeture possible, entre la languette (105) et l'évidement (109), où la matière peut être fondue de manière sélective à l'aide d'un procédé de soudage par ultrasons pour assembler les deux extrémités de l'élément annulaire (101).

2. Dispositif de maintien (100) selon la revendication 1, dans lequel la languette (105) ou l'évidement (107) comprend une ou plusieurs géométries de fermeture (109).

3. Dispositif de maintien (100) selon l'une quelconque des revendications précédentes, dans lequel une extrémité de l'élément annulaire (101) comprend une première géométrie de serrage (127-1) destinée à s'engager avec un premier mandrin de tension (129-1) et l'autre extrémité de l'élément annulaire (101) comprend une deuxième géométrie de serrage (127-2) destinée à s'engager avec un deuxième mandrin de tension (129-2).

4. Dispositif de maintien (100) selon l'une quelconque des revendications précédentes, dans lequel l'élément annulaire (101) comporte un interstice adhésif (111) destiné à l'insertion d'un adhésif.

5. Dispositif de maintien (100) selon la revendication 4, dans lequel l'interstice adhésif (111) comprend au moins une rainure périphérique de récupération d'excédent (115-1, 115-2) destinée à recevoir l'excédent d'adhésif.

6. Dispositif de maintien (100) selon la revendication 5, dans lequel l'interstice adhésif (111) comprend une première rainure périphérique de récupération d'excédent (115-1) s'étendant à proximité d'un bord périphérique supérieur (113-1) et une deuxième rainure périphérique de récupération d'excédent (115-2) s'étendant à proximité d'un bord périphérique inférieur (113-1).

7. Dispositif de maintien (100) selon l'une quelconque des revendications 4 à 6, dans lequel l'interstice adhésif (111) comprend une pluralité de points de fixation en saillie (117).

8. Dispositif de maintien (100) selon la revendication 7, dans lequel les points de fixation (117) sont répartis le long de l'interstice adhésif (111) et/ou sont disposés au centre de l'interstice adhésif (111).

9. Dispositif de maintien (100) selon l'une quelconque des revendications 3 à 8, dans lequel l'interstice adhésif (111) comprend une pluralité de pieds de contact saillants (119).

10. Dispositif de maintien (100) selon la revendication 9, dans lequel les pieds de contact (119) sont répartis le long de l'interstice adhésif (111) et/ou sont disposés par paires.

11. Dispositif de maintien (100) selon l'une quelconque des revendications précédentes, dans lequel l'élément annulaire (101) comprend une encoche d'articulation (121) sur sa circonférence extérieure.

12. Dispositif de maintien (100) selon la revendication 11, dans lequel l'encoche d'articulation (121) est disposée à l'opposé de l'élément de fermeture (103).

13. Dispositif de maintien (100) selon l'une quelconque des revendications précédentes, dans lequel l'élément annulaire (101) comprend au moins un élément de protection des bords (123) destiné à enserrer un bord (125) de l'ébauche dentaire (200).

14. Procédé de serrage d'une ébauche dentaire ronde (200) à l'aide d'un dispositif de maintien (100) selon l'une quelconque des revendications 1 à 13.
